# EUROPEAN PATENT APPLICATION

(11) **EP 0 850 995 A2**
(43) Date of publication of application: **01.07.1998**
(21) Application number: 97122479.5
(22) Date of filing: 19.12.1997
(51) Int. Cl.: C08L 83/04, C08K 9/04, C08K 13/06, C08K 5/54

(54) **Addition curable compositions curable to high tensile strength; tack free compositions through appropriate filler selection**

(30) Priority: 24.12.1996 US 772539; 03.12.1997 US 984585
(71) Applicant: DOW CORNING CORPORATION, Midland Michigan 48686-0994 (US)
(72) Inventor: Kalinowski, Robert Edward, Auburn, Michigan 48611 (US); Tomalia, Mary Kay, Midland, Michigan 48640 (US); Wolf, Andreas Thomas Franz, 1420 Braine-L'Alleud (BE)
(74) Representative: Patentanwälte Sternagel & Fleischer

(57) **Abstract**

This invention provides for the preparation of an addition curable composition that is curable to a high tensile strength, tack free composition. This composition comprises an organic polymer having on average at least 1.4 alkenyl groups per molecule, a crosslinker having on average at least 1.4 hydrosilyl groups per molecule, a platinum group metal-containing catalyst and a specific ratio of a fatty acid treated, precipitated calcium carbonate filler having an average particle size in the range of 0.05 to 1 micrometer and a ground filler selected from the group consisting of calcium carbonate, kaolin clay and amorphous, non-quartz silica, each having an average particle size in the range of 0.2 to 40 micrometers.

## Description

This invention relates to an addition curable composition containing alkenyl functional organic polymers and hydrosilyl functional crosslinkers. This composition attains improved properties through appropriate filler selection.

General representations of the prior art of this invention include: Saam and Macosko, Polym. Prepr., 26 (2) 48-9 (1985); JP-A 2-75644; U.S. Patent 5,409,995 and EP-A 0 709 403.

Silicone compounds are known for their weather resistance, water repellency and thermal stability. However, they are more expensive than their organic counterparts which also lack a suitable property profile. Silicon modified organic materials provide another option. For example, addition curable compositions which utilize a hydrosilyl functional or Si-H containing compound to crosslink an alkenyl functional organic polymer are useful as sealants, adhesives coatings, molding or potting compounds, gels or additives.

To improve physical properties of cured, addition curable compositions, such as tensile strength, maximum elongation and modulus, the art employs reinforcing fillers, such as treated precipitated calcium carbonate, silica, carbon black and the like within the composition. While some properties are enhanced by these fillers, other properties, such as surface tack and tack free time, are typically unaffected or negatively affected.

To further reduce the cost of addition curable compositions, extending fillers, such as ground calcium carbonate, kaolin clays and so forth, are also added to the composition. However, the physical properties of the cured composition containing these fillers are normally not improved.

The addition of either reinforcing or extending fillers are also found to reduce the potential extrusion rate of the composition.

Unexpectedly, we have determined that by adding certain additional fillers in specific combinations an addition curable composition of improved property profiles is obtained.

Thus, the addition of a fatty acid treated precipitated calcium carbonate filler and a ground filler in specific ratios to an addition curable composition provides a cured composition with improved overall properties, such as increased maximum elongation, high tensile strength, modulus and tack free surface, while also enhancing the extrusion rate of the resulting composition.

The objective of our invention is achieved by preparing an addition curable composition using certain fillers in specific ratios. Our claimed addition curable composition comprises an organic polymer having on average at least 1.4 alkenyl groups per molecule; a crosslinker having on average at least 1.4 hydrosilyl groups per molecule, a platinum group metal-containing catalyst; and a specific ratio of a fatty acid treated, precipitated calcium carbonate filler, having an average particle size in the range of 0.05 to 1 micrmeter and a ground filler selected from the group consisting of calcium carbonate, kaolin clay and amorphous, non-quartz silica, having an average particle size in the range of 0.2 to 40 micrometers.

More particularly, this invention provides an addition curable composition comprising:
(A) 100 parts by weight of an organic polymer having on average at least 1.4 alkenyl groups per molecule;
(B) an amount sufficient to cure the composition of a crosslinker having on average at least 1.4 hydrosilyl groups per molecule;
(C) a platinum group metal-containing catalyst in an amount sufficient to cure said composition;
(D) 25 to 250 parts by weight of a fatty acid treated, precipitated calcium carbonate filler having an average particle size in the range of 0.05 to 1 micrometer; and
(E) 25 to 125 parts by weight of a ground filler selected from the group consisting of calcium carbonate, kaolin clay and amorphous, non quartz silica each having an average particle size in the range of 0.2 to 40 micrometers;
   provided, that the ratio of fatty acid treated precipitated calcium carbonate filler to ground filler ranges from 10:1 to 1:5.

Component (A) is an organic polymer having on average at least 1.4 alkenyl groups per molecule. This polymer is linear or branched and may be a homopolymer, copolymer or terpolymer. Said polymer may also be present as a mixture of different organic polymers so long as there is on average at least 1.4 alkenyl groups per polymer molecule. Specific examples of the polymer include polyether, such as polyoxyethylene, polyoxypropylene, polyoxytetramethylene and polyoxyethylene-polyoxypropylene; a polyester prepared by condensation of a dibasic acid, such as adipic acid and a glycol or polyester prepared by a ring-opening polymerization of lactones; ethylene-propylene copolymer; a polybutylene such as polyisobutylene; a copolymer of isobutylene with isoprene or the like; polychloroprene; polyisoprene; a copolymer of isoprene with butadiene, acrylonitrile, styrene or the like; polybutadiene; a copolymer of butadiene with styrene, acrylonitrile or the like; and a polyolefin prepared by hydrogenating polyisoprene, polybutadiene or a copolymer of isoprene or butadiene with acrylonitrile, styrene or the like.

Our preferred organic polymer comprises a homopolymer or a copolymer selected from the group consisting of polyether, polyester and polybutylene, where the polybutylene chain may comprise repeat units having the following formulas 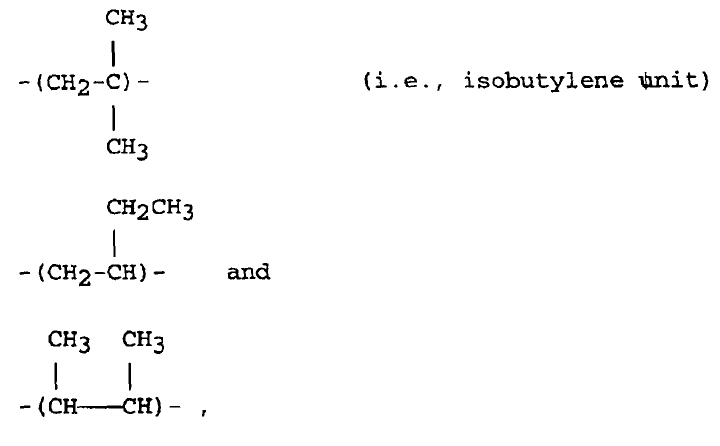 as well as rearranged products such as
-(CH₂CH₂CH₂CH₂)- and 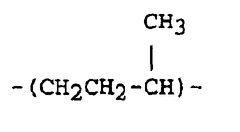 polyisoprene; polybutadiene; a copolymer of isobutylene and isoprene; a copolymer of isoprene and butadiene; a copolymer of isoprene and styrene; a copolymer of butadiene and styrene; a copolymer of isoprene, butadiene and styrene and a polyolefin polymer prepared by hydrogenating polyisoprene, polybutadiene or a copolymer of isoprene and styrene; a copolymer of butadiene and styrene or a copolymer of isoprene, butadiene and styrene.

It is more preferred that our organic polymer comprise a homopolymer or copolymer wherein at least 50 mole percent of the repeat units are isobutylene units of the structure:

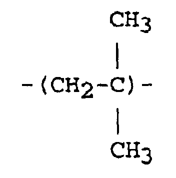

One or more hydrocarbon monomers, such as isomers of butylene, styrene, derivatives of styrene, isoprene and butadiene may be copolymerized with isobutylene, the preferred co-monomer being selected from 1-butene, α-methylstyrene and isoprene. It is even more preferred that the organic polymer comprise at least 80 mole percent of the same isobutylene repeat units. Optionally, the organic polymer, other than the alkenyl groups, is a homopolymer essentially consisting of isobutylene repeat units.

The alkenyl groups of the organic polymer are not limited and include, for example, vinyl, allyl, 1-hexenyl and decadecenyl, preferably allyl. In preferred embodiments, a group X may bond the alkenyl group to the main chain of the organic polymer, as described by formula: 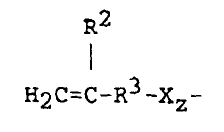 wherein R² is a hydrogen atom or a methyl radical, R³ is a divalent hydrocarbon radical having 1 to 18 carbon atoms and z is 0 or 1. The group X bonds with R³ of the alkenyl group through a group other than carbon, forming an ether, ester, carbonate, amide, urethane or siloxane linkage, preferably an ether linkage, to the main chain of the organic polymer.

The alkenyl groups are found pendant along the polymer chain or at the chain ends; preferably, the alkenyl groups are at the chain ends. It is most preferred that the majority of the organic polymer molecules have an alkenyl group at each chain end.

While there must be on average at least 1.4 alkenyl groups per organic polymer molecule, it is preferred that each polymer molecule have on average 1.8 to 8 alkenyl groups, with 1.8 to 4 alkenyl groups being more preferred.

The alkenyl group is introduced into the organic polymer by known methods. Typically, the alkenyl groups are introduced during or after polymerization.

The method for introducing alkenyl group after polymerization includes, for example, reacting an organic polymer having a functional group, such as hydroxyl group or alkoxide group positioned in the chain end, the main chain or the side chain, with an organic compound having an alkenyl group and an active group that are reactive with said functional group, to thereby introduce said alkenyl group into said polymer molecule. Specific examples, of organic compounds having alkenyl and active groups which are reactive to said functional group, are a C₃-C₂₀ unsaturated aliphatic acid, acid halide and acid anhydride such as acrylic acid, methacrylic acid, vinyl acetate, acrylic chloride and acrylic bromide; a C₃-C₂₀ unsaturated aliphatic acid substituted halide, such as allyl chloroformate (CH₂CHCH₂OCOCl) or allyl bromoformate (CH₂CHCH₂OCOBr); allyl chloride; allyl bromide; vinyl(chloromethyl)benzene; allyl(chloromethyl)benzene; allyl(bromomethyl)benzene; allyl chloromethyl ether; allyl(chloromethoxy)benzene; 1-butenyl chloromethyl ether; 1-hexenyl(chloromethoxy)benzene; allyloxy(chloromethyl)benzene and isocyanate functional C₃-C₂₀ unsaturated aliphatic organic compounds or isocyanate functional silanes having alkenyl groups, such as Vi(CH₃)₂Si(CH₂)₃NCO where Vi is and hereafter denotes vinyl.

The method for introducing alkenyl group during polymerization includes, for example, introducing the alkenyl group in the main chain or at the chain end of the polymer by using a vinyl monomer that has an alkenyl group having a low radical reactivity in the molecule, such as allyl methacrylate or allyl acrylate or a radical chain transfer agent that has an alkenyl group having a low radical reactivity, such as allyl mercaptan, when the organic polymer is prepared by a radical polymerization.

The bonding manner of the alkenyl group to the main chain of our organic polymer is not limited. Typically, the alkenyl group is directly bonded to the main chain of the organic polymer by a carbon-carbon linkage or it is bonded to the main chain of the polymer through an ether, ester, carbonate, amide, urethane or siloxane linkage.

The butylene polymers useful herein are prepared by methods known in the art, such as described in U.S. Patent 4,758,631. One specific telechelic butylene polymer, for example, is available from Kaneka Company (Japan) under the name EPION™

The number average molecular weight of the organic polymer is from 500 to 300,000, preferably from 5000 to 20,000 and most preferably from 8000 to 15,000.

The present composition also requires the presence of an amount sufficient to cure our claimed composition of a crosslinker having on average at least 1.4 hydrosilyl or SiH groups per molecule (Component (B)). Although the crosslinker must contain on average at least 1.4 hydrosilyl groups per molecule and no more than one silicon-bonded hydrogen atom per silicon atom, there is no other restriction on this crosslinker. For example, the crosslinker is an organic molecule containing the required hydrosilyl groups as described in U.S. Patent 5,409,995. Preferably, our crosslinker is an organohydrogensilane or organohydrogensiloxane where the remaining valences of the silicon-bonded hydrogen atoms are satisfied, for example, by oxygen atoms or monovalent hydrocarbon radicals comprising one to seven carbon atoms.

The monovalent hydrocarbons radicals are, for example, alkyls such as methyl, ethyl, propyl, tertiary butyl and hexyl; cycloalkyls such as cyclohexyl; aryls such as phenyl or tolyl; and halogen substituted alkyls, such as 3,3,3-trifluoropropyl or perfluoropropyl. Preferred is when all of the monovalent hydrocarbon radicals are methyl.

Organohydrogensiloxanes are more preferred as our crosslinker and such useful crosslinkers are more fully described, for example, in U.S. Patents 3,989,668; 4,753,978 and 5,409,995. This crosslinker can be a homopolymer, a copolymer or mixtures thereof, containing for example, diorganosiloxy units, organohydrogensiloxy units, triorganosiloxy units and SiO₂ units. Structurally, it can be linear, cyclic or branched polymers and copolymers. It is preferred that our crosslinker be a linear organohydrogensiloxane or a mixture of a cyclic and linear organohydrogensiloxane.

The optional crosslinkers are selected from methylhydrogen siloxane cyclics [MeHSiO]ₛ where s is from 4 to 10 or methylhydrogen siloxane linears (Me)₃SiO((Me)(H)SiO)ₘ((Me)₂SiO)ₙSi(Me)₃ where m is from 3 to 10 and n is from 1 to 5, in each case where Me is and hereafter denotes methyl. The most optional crosslinker is the methylhydrogen siloxane linear (Me)₃SiO((Me)(H)SiO)ₘ((Me)₂SiO)ₙSi(Me)₃ where m is 5, n is 3 and Me is methyl.

The amount of crosslinker useful in the present composition is that sufficient to effect cure. Generally, a useful amount of crosslinker is that amount sufficient to provide a molar ratio of hydrosilyl groups in the crosslinker to alkenyl groups in the organic polymer to within a range of 0.65:10 to 10:1. The preferred molar ratio is within a range of 1:1 to 5:1. More preferred is a molar ratio of 1:1 to 2.2:1.

The crosslinker may be added as a single species or as a mixture of two or more different species.

A platinum group metal-containing catalyst (Component (C)) is used in our curable composition in an amount sufficient to promote curing of said composition. This catalyst is any such catalyst that is known to catalyze hydrosilation reactions. By "platinum group metal", we mean ruthenium, rhodium, palladium, osmium, iridium and platinum. A particularly useful group of catalysts in the present composition are the platinum complexes of U.S. Patents 3,419,593 and 5,175,325, which more completely show such complexes and their preparation. Preferred catalysts are solutions containing complexes of platinum with vinylsiloxane. Other examples of useful catalysts are found in U.S. Patent 3,989,668; 5,036,117; 3,159,601; 3,220,972; 3,296,291; 3,516,946; 3,814,730 and 3,928,629.

The amount of platinum group metal-containing catalyst useful in effecting curing of the present composition is not limited as long as there is a sufficient amount to accelerate a reaction between the hydrosilyl groups and the alkenyl groups. The appropriate amount of catalyst will depend upon the particular catalyst used. In general, as low as 0.1 part by weight of platinum group metal, based on 1 million parts by weight of organic polymer, is useful (ie. 0.1 ppm). Preferably, the amount of platinum group metal is at least 5 ppm. More preferred is from 10 to 200 ppm of platinum group metal.

This catalyst may be added as a single species or as a mixture of two or more different species. Adding the catalyst as a single species is preferred.

To reduce the cost of our addition curable composition, extending fillers, such as ground calcium carbonate, kaolin clay and amorphous non-quartz silica, may be added to the composition. These extending fillers reduce the cost without impairing the physical properties of the cured composition.

To improve the physical properties, such as high tensile strength, maximum elongation and modulus, of the cured addition curable composition, reinforcing fillers, such as treated precipitated calcium carbonate, silica, carbon black and the like. Although certain properties are enhanced by these fillers, other properties, such as surface tack and tack free time, are typically unaffected or negatively affected.

By adding certain fillers in specific combinations, we have developed a surprising addition curable composition that achieves a high tensile strength and tack free profile when cured.

Component (D) is a fatty acid treated, precipitated calcium carbonate filler, having an average particle size in the range of 0.05 to 1 micrometer, preferably from 0.07 to 0.1 micrometer. As used herein, the term "fatty acid treated" means the filler particles are contacted with a mixture of saturated or unsaturated aliphatic fatty acids (C₁₂-C₂₀) so at least a partial reaction of the fatty acids with the filler surface occurs.

This fatty acid treated precipitated calcium carbonate filler contributes positively to the improvement in physical properties of the cured composition, particularly tensile strength and maximum elongation, however, tack free time is not improved and extrusion rate is decreased. These fatty acid treated precipitated calcium carbonate fillers are commercially available, such as Winnofil SPM manufactured by ICI, Socal 312N manufactured by Solvay and Ultra-pflex manufactured by Pfizer. Winnofil SPM is preferred because its use results in the highest maximum elongation.

The fatty acid treated, precipitated calcium carbonate filler is added to our composition in amounts from 25 to 250 parts by weight, based on 100 parts by weight of the organic polymer. It is preferred to use from 50 to 125 parts by weight, with 100 to 125 parts being more preferred. One or more types of fatty acid treated, precipitated calcium carbonate filler may be added to our claimed composition.

An improved property profile is obtained herein through the addition of a ground filler selected from the group consisting of calcium carbonate, kaolin clay and amorphous, non-quartz silica, each having an average particle size in the range of 0.2 to 40 micrometer (Component (E)) to our curable composition.

The preferred average particle size of this ground filler is in the range of 0.2 to 25 micrometers, with 0.2 to 15 micrometers being more preferred.

The ground filler may be treated or untreated. As used herein, "treated" means the filler particles are contacted with one or more treating agents so at least a partial reaction of the treating agent with the filler particle surface occurs. Examples of useful treating agents for our ground filler include fatty acids, fatty acid esters, resin acids, titanates, vinylsilanes and hexamethyldisilazane. Treated ground fillers are preferred.

Commercially available examples of untreated ground calcium carbonate filler include Atomite™, manufactured by ECC America and Omycarb™ UFT and FT manufactured by Omya.

Commercially available examples of untreated ground calcium carbonate filler include CS-11 manufactured by Georgia Marble.

Commercially available examples of untreated ground kaolin clay filler include Burgess™ KE and Burgess™ iceberg, both manufactured by Burgess and Bilt Plates™ 156 manufactured by Vanderbilt.

Commercially available examples of untreated ground amorphous non quartz silica filler include Pumasil™ 25/8 and Pumasil™ 5/2, both available from General Chemicals and Plastics Services Company.

Ground calcium carbonate is our preferred ground filler. It is most preferred that this filler be a fatty acid treated calcium carbonate filler, with the term "fatty acid treated" being as earlier defined.

This ground filler is added in amounts from 25 to 125 parts by weight based on 100 parts by weight of the organic polymer. It is preferred to use from 25 to 100 parts by weight with 40 to 75 parts being more preferred. One or more types of ground fillers may be added to our curable composition.

The fatty acid treated precipitated calcium carbonate filler and the ground filler provide our invention with improved overall properties when added in certain ratios. These ratios will vary depending on the specific properties desired, the fillers employed, the SiH/alkenyl ratio and the crosslinkers utilized. Generally, a ratio of fatty acid treated precipitated calcium carbonate to ground filler of 10:1 to 1:5 is beneficial. It is preferred that this ratio range from 5:1 to 1:1, with 3:1 to 1:1 being most preferred.

The present composition may cure rapidly at room temperature. To hinder this cure, an inhibitor is normally added to our composition. The inhibitor is any of those materials known to inhibit the catalytic activity of platinum group metal-containing catalysts. By "inhibitor", we mean a material that retards the room temperature curing of our composition when incorporated therein at less than 10 weight percent of the composition and also without preventing the elevated temperature cure of our composition.

Inhibitors for platinum group metal-containing catalysts are well known in the art. A preferred class of inhibitors are acetylenic alcohols as described in U.S. Patent 3,445,420. Such acetylenic alcohols are exemplified by ethynylcyclohexanol or methylbutynol. Other inhibitors which may be useful in the present composition are described by U.S. Patent 5,036,117.

The amount of inhibitor useful in the present composition is not known to be critical and is any amount that will retard the reaction of the hydrosilyl groups with the alkenyl groups, while not preventing the same reaction at elevated temperatures. The specific amount of inhibitor to be employed will depend upon the particular inhibitor used, the concentration and type of catalyst and the nature and amounts of organic polymer and crosslinker. Generally, when an inhibitor is used it is preferred that at least one mole of inhibitor be present for each mole of platinum group metal in the composition and that the inhibitor also not exceed one weight percent of the composition.

In addition to the above ingredients, our composition may include additives which impart or enhance certain properties of the cured composition or which facilitate processing of the curable composition. Typical additives include molecular sieve dessicants, adhesion promoters, plasticizers, functional and non-functional diluents, pigments, dyes and heat and/or ultraviolet light stabilizers. The effect of any such additives should first be evaluated as to their result and their impact on other properties of the composition, before use.

The addition curable composition of this invention is prepared by mixing all the ingredients together. When so mixed, our composition will begin to cure at room temperature unless a cure inhibitor is present. If this composition is not to be used immediately after mixing, it should be packaged in at least two parts keeping the crosslinker separate from the catalyst until curing is desired. For example, one part will contain the organic polymer, crosslinker and fillers and the other part will contain the organic polymer and catalyst. In a preferred embodiment, if greater shelf stability is desired, a molecular sieve dessicant is usually added to the part containing the crosslinker and fillers.

The following examples are presented for illustrative purposes and further delineated in the claims. Unless otherwise noted, casting and testing of the curable and cured materials herein were completed in the manner described below, under the conditions described.

Durometer (Shore A), ASTM D2240 using 6 mm thick samples, cured for 7 days at 23 ± 2^{o}C, 55 ± 5% relative humidity.

Tensile Strength, Modulus and Elongation, ASTMD412, using 1 mm thick samples, cured or 7 days at 23 ± 2^{o}C, 55 ± 5% relative humidity, Die C specimens.

Tack Free Time (TFT) - Measures the amount of time for sufficient surface cure that material will not transfer to other substrates when contact occurs. Material was spread 1.25 mm thick on a clean polyethylene surface at 23 ± 2^{o}C, 55 ± 5% relative humidity and a timer immediately started. Hands were thoroughly washed and dried. Periodically, the surface was lightly touched with the fingertip (pressing hard enough to leave an indentation if the skin over time was reached) and then slowly drawn away. The finger was cleaned immediately after touch and the sequence was repeated until no material adhered to the fingertip.

Surface Tack - This test was done in a similar manner to TFT except using the samples cured for 7 days at 23 ± 2^{o}C, 55 ± 5% relative humidity prior to testing. An assessment was made of the tackiness as follows: dry - sample didn't feel tacky at all; slight tack - sample felt tacky but separated easily once finger was lifted; medium tack - sample felt tacky and sample lifted up to 15 mm before separating from finger, once finger was lifted; strong tack - felt very tacky and sample lifted up to 25 mm before separating from finger, once finger was lifted.

Extrusion Rate - is the weight, in grams per minute (g/min), of the uncured composition when extruded through a 3.2 mm orifice when the composition was under a pressure of 620 kPa.

### Example 1

(A) A masterbatch of base material was prepared by combining 500 g CH₂=CH(CH₂)₆CH(Cl)CH₂((CH₃)₂C-CH₂)ₘ(CH₃)₂ C-phenyl-C(CH₃)₂(CH₂(CH₃)₂C)ₙCH₂CH(Cl)(CH₂)₆CH=H₂, Mₙ= 9,400, polydispersity Mw/Mn=1.2, with m and n being equal and m+n being 160, manufactured by Kaneka™ Corporation (decadiene PIB) with 500 g of Panalane™ L-14E, a low molecular weight polybutene polymer having a viscosity of less than 320 mm²/s (cs), manufactured by Amoco™ Corporation (PB Polymer). This base material was placed in a Ross™ mixer and mixed for 15 minutes at 68 rpm.
(B) 50 g of the base material prepared in Example 1(A) were next mixed with 0.55 g of methylhydrogensiloxane cyclic tetramer (% H as SiH = 1.487) manufactured by Petrarch™ in a Whip™ mixer for 30 seconds at 425 rpm under a full vacuum of 8.4 kPa (63 mm Hg) to provide a SiH:Allyl ratio of 1.54:1. After scrapedown of the mixing pot, 0.71 g of a platinum-containing complex which was the neutralized reaction product of chloroplatinic acid and sym-divinyltetramethyldisiloxane having a platinum concentration of 0.2% by weight (corresponding to 170 parts of Pt based on 1 million parts of decadiene PIB) was added and mixed for 30 seconds at 425 rpm with a full vacuum. Samples were cast immediately onto polyethylene film. Tensile stength, modulus and maximum elongation were tested and results are given in Table 1. [Not of this invention.]
(C) 50 g of the base material of Example 1(A) were also mixed with 50 g of a surface treated, precipitated calcium carbonate, Winnofil™ SPM, available from ICI, (200 parts filler per 100 parts hexenyl PIB) in a Whip™ mixer for two 30 second mixing cycles, each with scrapedown under full vacuum of 8.4 kPa (63 mm Hg) at 425 rpm. After filler incorporation, 0.517 g of methylhydrogensiloxane cyclic tetramer (% H as SiH=1.487) (SiH:alkenyl 1.45:1) from Petrarch™ was mixed in under full vacuum for 30 seconds at 425 rpm. Following scrapedown, 0.71 g of a platinum-containing complex, which was the neutralized reaction product of chloroplatinic acid and sym-divinyltetramethyldisiloxane having a platinum concentration of 0.2% by weight (170 ppm Pt), was mixed in for 30 seconds at 425 rpm with a full vacuum. Samples were cast immediately onto a polyethylene film. Tensile stength, modulus and maximum elongation were tested and results are given in Table 1. [Invention Example.]

The results in Table 1 illustrate that the physical properties of our filled sample are much improved over the unfilled sample.

**Table 1**

| Example | Tensile Strength Mpa | Maximum Elongation % | 100% Modulus MPA |
|---|---|---|---|
| 1(B) Unfilled | 0.14 | 304 | 0.06 |
| 1(C) surface treated precipitated calcium carbonate filled | 0.9 | 1052 | 0.24 |

### Example 2

(A) 2000 g of Epion™ Polymer, an allyl ended functional polyisobutylene polymer having a number average molecular weight of 10000 (Mn) and an alkenyl functionality of approximately 1.7, manufactured by Kaneka™ Corporation (Allyl PIB) and 2000 g of Panalane™ L-14E were mixed for 5 minutes at 68 rpm. After scrapedown, mixing was continued for a total of 15 minutes at 68 rpm to form a masterbatch of base material.
(B) 150 g of the base material prepared in Example 2(A) were next mixed with 3.36 g of Me₃SiO(MeHSiO)₅ (Me₂SiO)₃SiMe₃, (% H as SiH=0.76) giving an SiH:alkenyl ratio of 2:1 in a Ross™ mixer for 5 minute at 68 rpm. After scrapedown, 1.2 g of a solution of a platinum vinylsiloxane complex (giving 96 parts of platinum based on 1 million parts of Allyl PIB) were added and mixed for 3-5 minutes at 68 rpm. Extrusion rate was determined, samples were cast on polyethylene sheet and tack free time determined. Tensile stength, modulus and maximum elongation were tested and results are given in Table 2. [Not of this invention.]
(C) Six samples were prepared by mixing 150 g of the base material prepared in Example 2(A) with 112.5 g of a single filler selected from Winnofil™ SPM, Albacar™ 5970, Hakuenka™ CCR, Socal™ 312N, CS-11 and Atomite™ as described in Table 3, in a Ross™ mixer (150 parts filler per 100 parts of Allyl PIB.)

The filler of choice was next added to the base material and a spatula was used to slightly stir the filler into the base. This achieved a slight wet out of the filler with base material and improved the ease of incorporation of filler into the formulation. The filler was incorporated with 5-10 minutes mixing cycles with no vacuum at 68 rpm until a good dispersion was obtained, i.e. no clearly visible filler particles were present when a small amount of the mixture was thinly spread out on a sheet of polyethylene. Once the filler was dispersed, 1.92 g Me₃SiO(MeHSiO)₅(Me₂SiO)₃SiMe₃ (% H as SiH = 0.76) giving an SiH:alkenyl ratio of 1.1:1 were added and mixed for 5 minutes at 68 rpm. After scrapedown, 1.2 g of a solution of a platinum vinylsiloxane complex (96 ppm Pt) were added and mixed for 3-5 minutes at 68 rpm.

Extrusion rate was determined, samples were cast on polyethylene sheeting and tack free time determined. Tensile stength, modulus and maximum elongation were tested and results are given in Table 2. [Invention Example.]

**Table 2**

| Type of Filler | Amt of Filler pph | TFT min | Durometer | Tensile Strength MPa | Max. Elong. % | 200% Modulus MPa | Surface Tack | Extrusion Rate g/min |
|---|---|---|---|---|---|---|---|---|
| Unfilled | - | 32 | 15 | 0.15 | 128 | na | strong | 724 |
| Winnofil SPM¹ | 150 | <70 | 21 | 1.2 | 674 | 0.5 | slight | 29 |
| Albacar² | 150 | 39 | 29 | 1.08 | 330 | 0.68 | dry | nt* |
| Hak CCR³ | 150 | <45 | 25 | 0.71 | 321 | 0.53 | dry | 199 |
| Socal 312N⁴ | 150 | <60 | 18 | 0.9 | 558 | 0.42 | medium | 36 |
| CS-11⁵ | 150 | 45 | 21 | 0.46 | 221 | 0.43 | dry | 327 |
| Atomite⁶ | 150 | <45 | 25 | 0.62 | 212 | 0.58 | dry | nt* |

| | | | | | | | | |
|---|---|---|---|---|---|---|---|---|
| * not tested | | | | | | | | |
| ¹ Winnofil™ SPM, a stearic acid treated precipitated calcium carbonate manufactured by ICI | | | | | | | | |
| ² Albacar™ 5970, precipitated calcium carbonate manufactured by Spec Minerals | | | | | | | | |
| ³ Hakuenka™ CCR, an oleic acid treated precipitated calcium carbonate manufactured by Shirashi | | | | | | | | |
| ⁴ Socal™ 312N, a stearic acid treated precipitated calcium carbonate manufactured by Solvay | | | | | | | | |
| ⁵ Georgia Marble™ CS-11, a stearate treated ground calcium carbonate manufactured by Georgia Marble | | | | | | | | |
| ⁶ Atomite™, a ground calcium carbonate manufactured by ECC America | | | | | | | | |

### Example 3

Filled samples were prepared in the same manner as described in Example 2(C) above, except a lower filler loading was used. The fillers evaluated included precipitated calcium carbonate, ground calcium carbonate, kaolin clays and amorphous non-quartz silica. As noted in the description of the fillers following the table, some of these fillers were surface treated. In this example, 37.5 g of filler were added to 150 g of the base material prepared as described in Example 2(A) so the sample contained 50 parts of filler based on 100 parts Allyl PIB.

Extrusion rate was determined, samples were cast on polyethylene sheeting and tack free time determined. Tensile stength, modulus and maximum elongation were tested and results are given in Table 3.

**Table 3**

| Type of Filler | Amt of Filler pph | TFT min | Durometer | Tensile Strength MPa | Max. Elong. % | 200% Modulus MPa | Surface Tack | Extrusion Rate g/min |
|---|---|---|---|---|---|---|---|---|
| Unfilled | - | 32 | 15 | 0.15 | 128 | na | strong | 724 |
| Winnofil SPM¹ | 50 | 40 | 19 | 0.43 | 252 | 0.35 | slight | 315 |
| Albacar² | 50 | 95 | 17 | 0.33 | 187 | na | dry | nt* |
| CS-11⁵ | 50 | <35 | 17 | 0.24 | 170 | na | dry | 569 |
| Burgess KE⁶ | 50 | <120 | 20 | 0.6 | 234 | 0.5 | dry | 374 |
| Burgess Iceberg⁷ | 50 | <720 | 23 | 0.73 | 225 | 0.65 | dry | 465 |
| Bilt Plates⁸ | 50 | <120 | ** | ** | ** | ** | ** | ** |
| Pumasil 5/2⁹ | 50 | <25 | 20 | 0.9 | 345 | 0.54 | dry | 113 |
| Pumasil 25/8¹⁰ | 50 | 31 | 15 | 0.74 | 336 | 0.5 | dry | 179 |

| | | | | | | | | |
|---|---|---|---|---|---|---|---|---|
| * not tested | | | | | | | | |
| ** Material was cured but too tacky to test | | | | | | | | |
| ¹ Winnofil™ SPM, a stearic acid treated precipitated calcium carbonate manufactured by ICI | | | | | | | | |
| ² Albacar™ 5970, precipitated calcium carbonate manufactured by Spec Minerals | | | | | | | | |
| ⁵ Georgia Marble™ CS-11, a stearate treated ground calcium carbonate manufactured by Georgia Marble | | | | | | | | |
| ⁶ Burgess™ KE, a vinylsilane treated kaolin clay manufactured by Burgess | | | | | | | | |
| ⁷ Burgess™ Iceberg, a calcined kaolin clay manufactured by Burgess | | | | | | | | |
| ⁸ Bilt-Plates™ 156, an airfloat kaolin clay manufactured by Vanderbilt | | | | | | | | |
| ⁹ Pumasil™ 5/2, an amorphous non quartz silica available from General Chemicals and Plastics Services Company | | | | | | | | |
| ¹⁰ Pumasil™ 25/8, an amorphous non quartz silica available from General Chemicals and Plastics Services Company | | | | | | | | |

### Example 4

Various filled samples were prepared in the manner described in Example 2(C) using a fatty acid treated, precipitated calcium carbonate (Winnofil™ SPM) and a fatty acid treated, ground calcium carbonate (CS-11), except different filler loadings based on 100 parts by weight of Allyl PIB were used as shown in Table 4. In addition, samples were prepared mixing the Winnofil™ SPM and CS-11 in specific combinations with the base material to give a total of 150 parts by weight of the mixed fillers to 100 parts by weight of Allyl PIB. Samples were also prepared using a mixture of Albacar™ 5970, a precipitated calcium carbonate manufactured by Spec Minerals and Atomite™, a ground calcium carbonate manufactured by ECC America.

Extrusion rate was determined, samples were cast on polyethylene sheeting and tack free time determined. Tensile stength, modulus and maximum elongation were tested and results are given in Table 4. [Invention example.]

**Table 4**

| Type of Filler | Amt of Filler pph | TFT min | Durometer | Tensile Strength MPa | Max. Elong. % | 200% Modulus MPa | Surface Tack | Extrusion Rate g/min |
|---|---|---|---|---|---|---|---|---|
| Unfilled | - | 32 | 15 | 0.15 | 128 | na | strong | 724 |
| Winnofil SPM¹ | 150 | <70 | 21 | 1.2 | 674 | 0.5 | slight | 29 |
| " | 100 | 50 | 24 | 0.83 | 408 | 0.46 | slight | 133 |
| " | 50 | 40 | 19 | 0.43 | 252 | 0.35 | slight | 315 |
| | | | | | | | | |
| CS-11⁵ | 150 | 45 | 21 | 0.46 | 221 | 0.43 | dry | 327 |
| " | 100 | <32 | 20 | 0.36 | 201 | 0.35 | dry | 501 |
| " | 50 | <35 | 17 | 0.24 | 170 | na | dry | 569 |
| | | | | | | | | |
| SPM/CS^{x} | 125/25 | 40 | 24 | 1.05 | 526 | 0.53 | dry | 155 |
| " | 100/50 | 34 | 24 | 0.95 | 453 | 0.55 | dry | 142 |
| " | 75/75 | 32 | 25 | 0.95 | 447 | 0.55 | dry | 207 |
| " | 25/125 | <30 | 23 | 0.62 | 257 | 0.53 | dry | 278 |
| | | | | | | | | |
| Albacar/Atomite y | 100/50 | 52 | 22 | 0.95 | 321 | 0.6 | dry | 145 |
| " | 75/75 | <60 | 25 | 0.91 | 294 | 0.63 | dry | 175 |

| | | | | | | | | |
|---|---|---|---|---|---|---|---|---|
| ¹ Winnofi™l SPM, a stearic acid treated precipitated calcium carbonate manufactured by ICI | | | | | | | | |
| ⁵ Georgia Marble™ CS-11, a stearate treated ground calcium carbonate manufactured by Georgia Marble | | | | | | | | |
| ^{x} Combination of Winnofil™ SPM and Georgia Marble CS-11 | | | | | | | | |
| ^{y} Combination of Albacar™ 5970, a precipitated calcium carbonate manufactured by Spec Minerals and Atomite™, a ground calcium carbonate manufactured by ECC America | | | | | | | | |

## Claims

1. An addition curable composition comprising:
(A) 100 parts by weight of an organic polymer having on average at least 1.4 alkenyl groups per molecule;
(B) an amount sufficient to cure the composition of a crosslinker having on average at least 1.4 hydrosilyl groups per molecule;
(C) a platinum group metal-containing catalyst in an amount sufficient to cure said composition;
(D) 25 to 250 parts by weight of a fatty acid treated, precipitated calcium carbonate filler having an average particle size in the range of 0.05 to 1 micrometer; and
(E) 25 to 125 parts by weight of a ground filler selected from the group consisting of calcium carbonate, kaolin clay and amorphous, non quartz silica each having an average particle size in the range of 0.2 to 40 micrometers;
provided, that the ratio of fatty acid treated precipitated calcium carbonate filler to ground filler ranges from 10:1 to 1:5.

2. The addition curable composition of claim 1 wherein the organic polymer has on average 1.8 to 8 alkenyl groups per molecule and is selected from the group consisting of polyether, polyester, polybutylene, polyisoprene, polybutadiene, a copolymer of isobutylene and isoprene, a copolymer of isoprene and butadiene, a copolymer of isoprene and styrene, a copolymer of butadiene and styrene, a copolymer of isoprene, butadiene and styrene and a polyolefin prepared by hydrogenating polyisoprene, polybutadiene or a copolymer of isoprene and styrene, a copolymer of butadiene and styrene or a copolymer of isoprene, butadiene and styrene.

3. The addition curable composition of claim 2 wherein the amount of added crosslinker to the composition provides a ratio of hydrosilyl groups in the crosslinker to alkenyl groups in the organic polymer within a range of 0.65:10 to 10:1.

4. The addition curable composition of claim 1 wherein the crosslinker is selected from organohydrogensilane or organohydrogensiloxane and the remaining valences of the silicon-bonded hydrogen atoms are satisfied by oxygen atoms or monovalent hydrocarbon radicals of C₁ to C₇.

5. The addition curable composition of claim 4 wherein the crosslinker is selected from methylhydrogensiloxane cyclics [(Me)(H)SiO]_{s,} where s is from 4 to 10 or methylhydrogensiloxane linears (Me)₃SiO((Me)(H)SiO)ₘ((Me)₂SiO)ₙSi(Me)_{3,} where m is from 3 to 10 and n is from 1 to 5 and in each case Me is methyl.

6. The addition curable composition of claim 4 wherein the platinum group metal catalyst is platinum and the added amount is 0.1 to 200 parts by weight of platinum per one 1 million parts by weight of the organic polymer (A).

7. The addition curable composition of claim 1 and further comprising an inhibitor.

8. The addition curable composition of claim 7 packaged in two parts wherein one part contains (B), (D), (E) and a portion of (A) and the other part contains (C) and the balance of (A).
